# EUROPEAN PATENT APPLICATION

(11) **EP 2 019 553 A2**
(43) Date of publication of application: **28.01.2009**
(21) Application number: 08252306.9
(22) Date of filing: 04.07.2008
(51) Int. Cl.: H04N 7/26

(54) **Image transmitting apparatus, image transmitting method, receiving apparatus, and image transmitting system**

(30) Priority: 13.07.2007 JP 2007183988
(71) Applicant: Sony Corporation, Tokyo (JP)
(72) Inventor: Itakura, Eisaburo, Tokyo (JP)
(74) Representative: Davies, Simon Robert

(57) **Abstract**

An image transmitting apparatus transmits an image based on image frame information including encoded data of a plurality of areas obtained by dividing an image frame and a header including configuration information of each area. The apparatus includes an area selecting unit selecting one area or a plurality of areas from among the plurality of areas of one image frame or a plurality different image frames, an information processing unit extracting encoded data of the area selected by the area selecting unit from encoded data of the plurality of areas included in the image frame information of the one image frame or the plurality of different image frames and creating a header including configuration information of each area selected by the area selecting unit to generate new image frame information, and an image transmitting unit transmitting the image frame information generated by the information processing unit to a receiving end.

## Description

The present invention relates to an image transmitting apparatus, an image transmitting method, a receiving apparatus, and an image transmitting system.

An image distribution system has a configuration in which a server (image distribution apparatus) and client terminals (receiving apparatus) are connected through a network. When it is desired at a receiving end of such an image distribution system to display only part of an image frame, the following methods have been used in the related art to display the partial frame.
(1) The receiver receives and decodes all data required to form one complete frame and thereafter extracts and displays only the desired part of the image frame. (2) In the case of accumulated data, the server decodes one complete frame, thereafter extracts part of the image frame requested by the receiver, and re-encodes and transmits the part to the receiver. The receiver decodes and displays the partial frame.

According to the method (1), the network bandwidth used for transmission of data is greater than the bandwidth required for the receiver to achieve its purpose, and the receiver is therefore required to perform a decoding process that places a load heavier than actually required. The process results in significant consumption of a CPU when performed on a software basis and consumes great power when performed on a hardware basis. According to the method (2), the server is required to re-encode data which has been once encoded and then decoded. When the server is requested by a great number of client terminals to transmit selected parts of different images, the server must have a great deal of CPU resources and hardware processing resources to perform the re-encoding. Either of the methods has a problem in that resources are wastefully consumed in the excess of the amount of resources required for a client terminal to process a desired area.

JP-A-2003-179904 (Patent Document 1) discloses an image distribution system for extracting part of an image frame and transmitting the part from a transmitting end to a receiving end utilizing JPEG 2000 tiles.

In the image distribution system disclosed in Patent Document 1, an image formed by an arbitrary number of tiles including a view-point image and the neighborhood of the same is distributed from a transmitting end to a receiving end. At the receiving end, the tiles are decoded, and a display image in a range associated with the view point is re-constructed and displayed. In the image distribution system disclosed in Patent Document 1, a tile image distributed from a transmitting end to a receiving end is not displayed as it is, and the receiving end is required to perform a process of re-constructing the image to be displayed.

It is therefore desirable to allow an image of a selected area to be easily displayed at a receiving end.

Various respective aspects and features of the invention are defined in the appended claims. Combinations of features from the dependent claims may be combined with features of the independent claims as appropriate and not merely as explicitly set out in the claims.

According to an embodiment of the invention, there is provided an image transmitting apparatus transmitting an image based on image frame information including encoded data of a plurality of areas obtained by dividing an image frame and a header including configuration information of each area. The apparatus includes an area selecting unit selecting one area or a plurality of areas from among the plurality of areas of one image frame or a plurality different image frames, an information processing unit extracting encoded data of the area selected by the area selecting unit from encoded data of the plurality of areas included in the image frame information of the one image frame or the plurality of different image frames and creating a header including configuration information of each area selected by the area selecting unit to generate new image frame information, and a transmitting unit transmitting the image frame information generated by the information processing unit to a receiving end.

According to the embodiment of the invention, an image is transmitted based on image frame information including encoded data of a plurality of areas obtained by dividing an image frame and a header including configuration information of each area. For example, the image transmitting apparatus may include an encoding unit encoding an input image frame divided into a plurality of areas and obtaining the image frame information. Further, the transmitting apparatus may include an accumulation unit accumulating the image frame information. In this case, the encoding unit performs encoding, for example, according to JPEG (Joint Photographic Experts Group) 2000.

The area selecting unit selects one area or a plurality of areas from among a plurality of areas of one image frame or a plurality of different image frames. In this case, the area is selected based on, for example, area selection information transmitted from the receiving end. The information processing unit extracts encoded data of the selected area from encoded data of the plurality of areas included in the image frame information of the one image frame or the plurality of different image frames and creates a header including configuration information of each selected area to generate new image frame information. The new image frame information is transmitted to the receiving end by the transmitting unit.

As thus, described, new image frame information that is encoded data of selected areas added with a header including configuration information of each of the selected areas is transmitted to a receiving end. Therefore, an image of the selected areas can be easily displayed at the receiving end based on the configuration information included in the header.

According to the embodiment of the invention, an image is transmitted based on image frame information including encoded data of a plurality of areas obtained by dividing an image frame and a header including configuration information of each area. Encoded data of selected areas is extracted, and a header including configuration information of each of the selected areas is created to generate new image frame information. The image frame information is transmitted to a receiving end, and an image of the selected areas can be easily displayed at the receiving end.

According to an embodiment of the invention, an image transmitting apparatus processes image frame information including encoded data of a plurality of areas obtained by dividing an image frame and a header including configuration information of each area. The apparatus extracts encoded data of selected areas and creates a header including configuration information of the selected areas to generate new image frame information. The apparatus transmits the new image frame information to a receiving end such that an image of the selected areas can be easily displayed at the receiving end.

Embodiments of the invention will now be described with reference to the accompanying drawings, throughout which like parts are referred to by like references, and in which:
Fig. 1 is a block diagram showing an example of a configuration of an image distribution system as an embodiment of the invention;
Fig. 2 is a functional block diagram showing an example of a configuration of the image distribution system as an embodiment of the invention;
Fig. 3 shows a structure of a JPEG 2000 code stream and a structure of a tile-part header;
Fig. 4 shows a structure of a JPEG 2000 code stream and a structure of a main header;
Fig. 5 shows a structure of a tile-part header and a structure of an SOT marker segment;
Fig. 6 shows relationships between various sizes and a reference grid, an image area, and tiles;
Fig. 7 is a sequence diagram for explaining a sequence of processes performed by a server and a client terminal;
Fig. 8 shows an example of a configuration of tiles in an unprocessed image frame and an example of tile selection;
Fig. 9 shows an example of an image displayed on a display device of a client terminal;
Fig. 10 shows another example of an image displayed on the display device of the client terminal;
Fig. 11 shows values of marker segments in the example of a configuration of tiles in an unprocessed image frame shown in Fig. 8;
Fig. 12 shows parts to be changed in the marker segments to display images of tiles of arbitrarily selected tile numbers in arbitrary positions;
Fig. 13 shows an example of changes made to the marker segments to display an image as shown in Fig. 9 on the display device of the client terminal;
Fig. 14 shows an example of changes made to the marker segments to display an image as shown in Fig. 10 on the display device of the client terminal;
Fig. 15 show another example of a configuration of tiles in an unprocessed image frame and another example of tile selection;
Fig. 16 shows an example of an image displayed on the display device of the client terminal; and
Figs. 17A and 17B show an example of tile selection and an example of an image displayed at a client terminal.

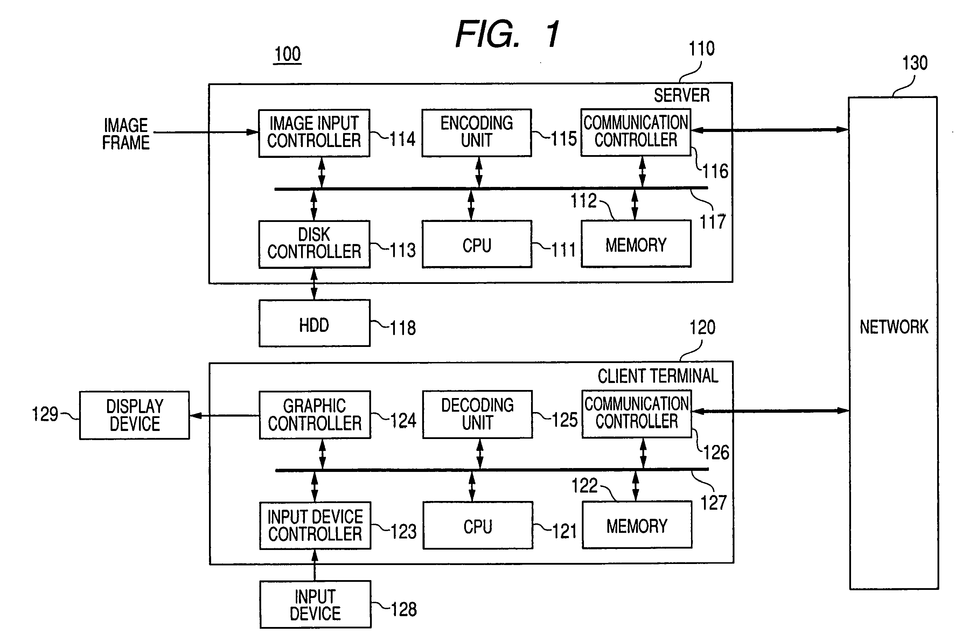

An embodiment of the invention will now be described with reference to the drawings. Fig. 1 shows an example of a configuration of an image distribution system 100 that is an embodiment of the invention.

The image distribution system 100 includes a server 110 and a client terminal 120. The client terminal 120 is connected to the server 110 through a network 130. The server 110 constitutes an image transmitting apparatus, and the client terminal 120 constitutes a receiving apparatus.

The server 110 includes a CPU (Central Processing Unit) 111, a memory 112, a disk controller 113, an image input controller 114, an encoding unit 115, and a communication controller 116. Those elements are connected to a bus 117.

The CPU 111 controls operations of the server 110 as a whole. The memory 112 includes a ROM (Read Only Memory) and a RAM (Random Access Memory). Control programs for controlling operations of the CPU 111 are stored in the ROM. The RAM serves as a working area of the CPU 111. The CPU 111 reads a control program stored in the ROM as occasion demands and transfers the control program thus read to the RAM to deploy the program. The CPU 111 controls various parts of the server 110 by reading and executing the control program deployed in the RAM.

The disk controller 113 controls an external hard disk drive (HDD) 118 according to instructions from the CPU 111. The hard disk drive 118 may be incorporated in the server 110. The hard disk drive 118 constitutes a storage unit.

The image input controller 114 acquires an image frame from a digital camera, a VTR (Video Tape Recorder) or the like according to an instruction from the CPU 111. The encoding unit 115 compresses and encodes the image frame acquired by the image input controller 114 according to JPEG 2000. Specifically, the encoding unit 115 divides the image frame into a plurality of tiles (rectangular areas) and encodes the tiles such that each tile can be independently decoded.

Encoded image data or a code stream output by the encoding unit 115 constitutes image frame information. The image frame information includes encoded data of the plurality of tiles obtained by dividing the image frame and a header including configuration information of each tile. The configuration information of each tile is information such as the size of the tile and the position of the tile relative to a reference grid.

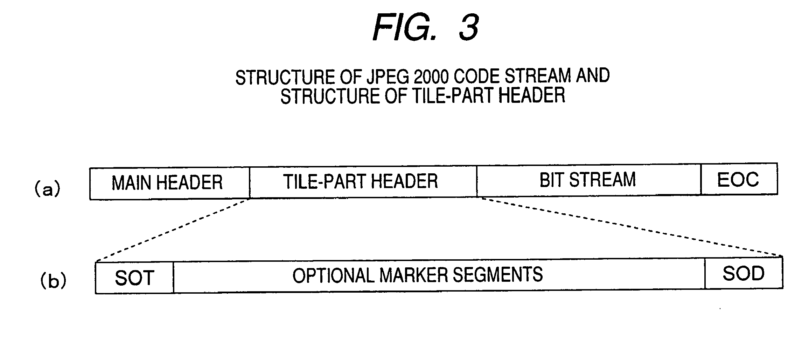

A structure of a code stream will now be described. (a) in Fig. 3 shows a structure of a code stream according to the JPEG 2000 standard. The code stream includes a main header which is located at the beginning of the stream, a tile-part header which is located at the beginning of a unit constituting a tile-part, a bit stream of the encoded data, and an EOC (End of Code Stream) marker indicating the end of the code stream. Although not shown, the area formed by a tile-part header and a bit stream repeatedly appears a number of times equivalent to the number of tiles.
(b) in Fig. 3 shows a structure of a tile-part header. A tile-part header includes an SOT (Start of Tile-part) marker which indicates the head of a tile-part, a marker segment which is optionally provided, and an SOD (Start of Data) marker code which indicates the head of bit stream data associated with the present tile-part. The SOD marker code also indicates the position of the end of the tile-part header.

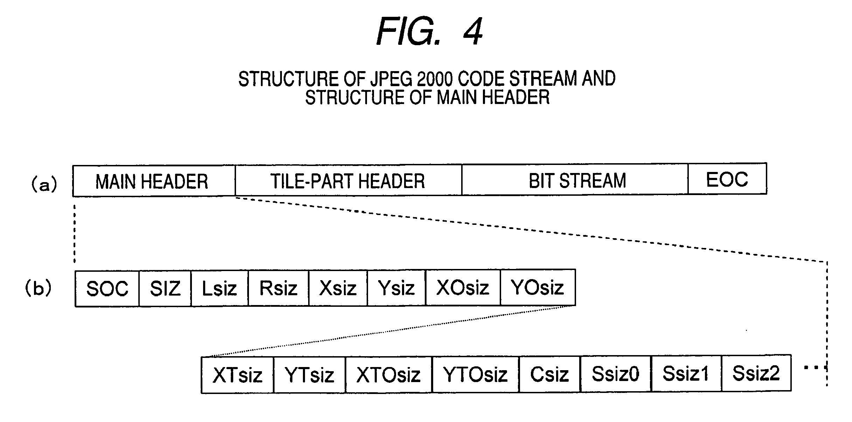

A structure of a main header forming part of the code stream will now be described. As shown in (b) in Fig. 4, the main header includes an SOC (Start of Code Stream) marker and an SIZ (Image and tile size) marker segment following the SOC marker and indicating an image and tile sizes. The SIZ marker segment includes SIZ, Lsiz, Rsiz, Xsiz, Ysiz, XOsiz, YOsiz, XTsiz, YTsiz, XTOsiz, YTOsiz, Csiz, Ssiz0, Ssiz1, and Ssiz2. (a) in Fig. 4 shows a structure of a code stream according to the JPEG 2000 standard in the same manner as in (a) in Fig. 3.

SIZ is a marker code indicating a marker segment and having a fixed value of OxFF51. Lsiz indicates the length of the marker segment in bytes. Rsiz indicates a profile specification for a decoder. Hereinafter, X represents the value of a size in the horizontal direction, and Y represents a size in the vertical direction. Xsiz and Ysiz indicate the size of a reference grid. XOsiz indicates the size of a horizontal offset of a left edge of an image from the origin of the reference grid. YOsiz indicates the size of a vertical offset of a top edge of the image from the origin of the reference grid. XTsiz indicates a horizontal size of a tile. YTsiz indicates a vertical size of a tile. XTOsiz indicates the size of a horizontal offset of a left edge of the first tile from the origin of the reference grid. YTOsiz indicates the size of a vertical offset of a top edge of the first tile from the origin of the reference grid. Csiz indicates the number of components in the image. Ssiz(i) indicates the bit depth and sign of an i-th component.

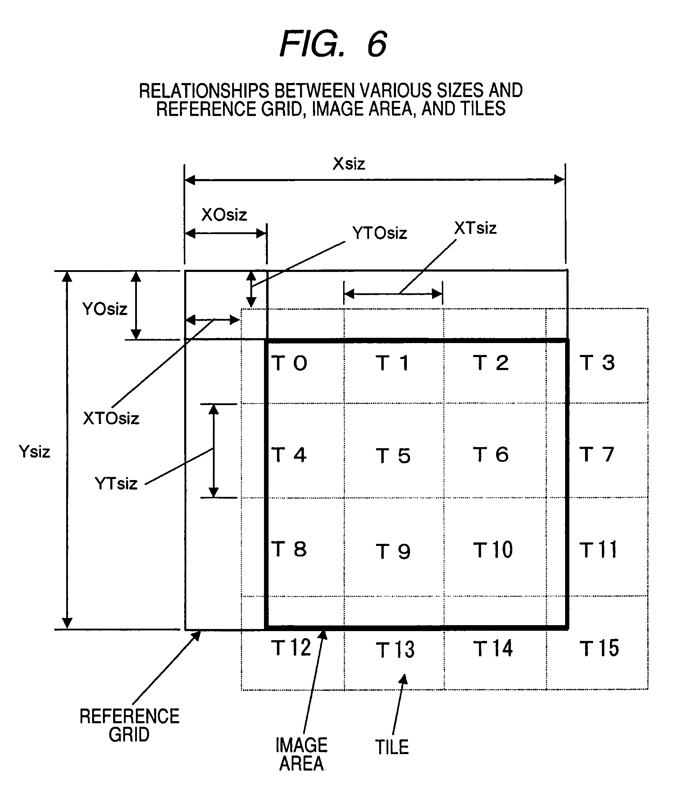

Fig. 6 shows relationships between such sizes and a reference grid, an image area, and tiles. In the illustrated example, an image area is divided into sixteen tiles represented by T0 to T15.

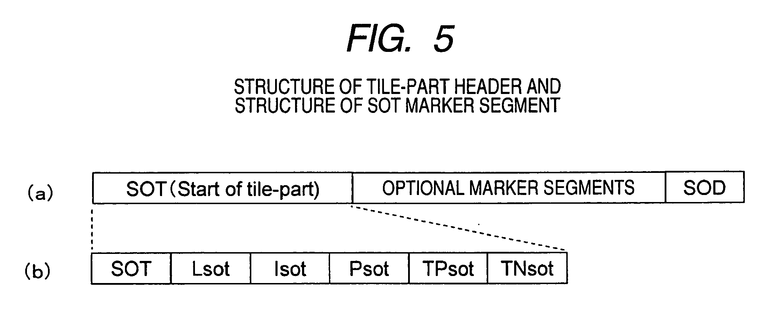

A structure of an SOT marker segment of a tile-part header will now be described. As shown in (b) in Fig. 5, an SOT marker segment includes SOT, Lsot, Isot, Psot, TPsot, and TNsot. (a) in Fig. 5 shows the structure of the tile-part header in the same manner as in (b) in Fig. 3.

SOT represents a marker code which has a fixed value of 0xFF90. Lsot indicates the length of the marker segment. Isot indicates tile numbers assigned in raster order starting with 0. Psot indicates the byte length from the starting byte of the SOT marker segment of the tile-part up to the end of the tile-part. TPsot represents tile-part numbers starting with 0 to specify the order in which tile-parts are to be decoded. TNsot indicates the number of tile-parts included in a certain tile. The above-mentioned tile numbers Isot are numbers indicating the positions of tiles. An image can be decoded and displayed in a desired position at a decoding end by changing the tile numbers of the image.

Referring to Fig. 1 again, encoded image data obtained by the encoding unit 115 is sent to the CPU 111 through the memory 112. Compression encoding of the image data may be performed on a software basis by the CPU 111. In this case, the encoding unit 115 may be deleted, and an image frame acquired by the image input controller 114 may be directly supplied to the CPU 111 and encoded by the same.

The communication controller 116 provides interfaces with a network 130. When encoded image data is transmitted to the client terminal 120, the CPU 111 transforms the image data into a communication format, e.g., the RTP (Real-time Transport Protocol) format and transmits the data to the network 130 through the communication controller 116 according to UDP (User Datagram Protocol)/IP (Internet Protocol).

The client terminal 120 includes a CPU 121, a memory 122, an input device controller 123, a graphic controller 124, a decoding unit 125, and a communication controller 126, and those elements are connected to a bus 127.

The CPU 121 controls operations of the client terminal 120 as a whole. The memory 122 includes a ROM and a RAM. Control programs for controlling operations of the CPU 121 are stored in the ROM. The RAM serves as a working area of the CPU 121. The CPU 121 reads a control program stored in the ROM as occasion demands and transfers the control program read to the RAM to deploy the program. The CPU 121 reads and executes the control program deployed in the RAM to control various parts of the client terminal 120.

The input device controller 123 connects an external input device 128 to the bus 127. For example, the input device 128 may be a mouse, a keyboard, or a remote controller. The graphic controller 124 controls an external display device 129 such as an LCD (Liquid Crystal Display) or a PDP (Plasma Display Panel).

The communication controller 126 provides interface with the network 130. The decoding unit 125 decodes encoded image data transmitted from the server 110.

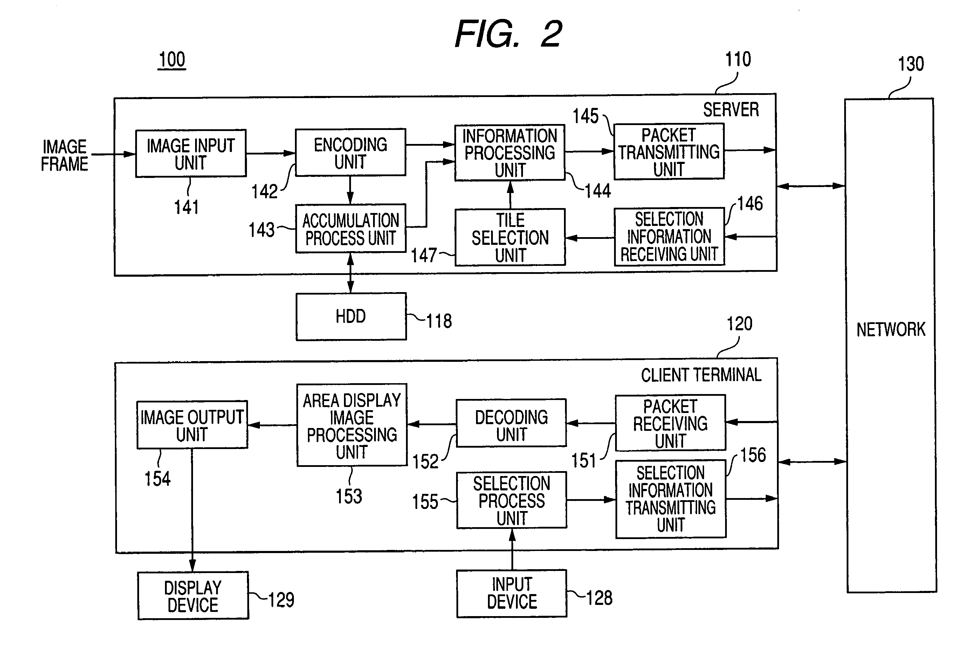

The server 110 of the image distribution system 100 shown in Fig. 1 includes functional blocks, i.e., an image input unit 141, an encoding unit 142, an accumulation process unit 143, an information processing unit 144, a packet transmitting unit 145, a selection information receiving unit 146, and a tile selection unit 147, as shown in Fig. 2.

The image input unit 141 acquires an image frame from a digital camera or a VTR (Video Tape Recorder). The encoding unit 142 encodes the image frame acquired by the image input unit 141 according to the JPEG 2000 standard to obtain a code stream (image frame information) that is encoded image data.

The accumulation process unit 143 transforms the code stream obtained by the encoding unit 142 into a format suitable for accumulation and supplies the resultant code stream to the HDD 118. The accumulation process unit 143 transforms a code stream read from the HDD 118 into the initial format of the same and supplies the resultant code stream to the information processing unit 144.

The selection information receiving unit 146 receives tile selection information transmitted from the client terminal 120 and supplies the information to the tile selection unit 147. The tile selection unit 147 selects tiles based on the tile selection information and supplies the selection information to the information processing unit 144.

The code stream obtained through encoding at the encoding unit 142 or the code stream read from the HDD 118 is supplied to the information processing unit 144. The information processing unit 144 extracts encoded data of the tiles selected by the tile selection unit 147 from encoded data of a plurality of tiles included in the code stream and creates a header including configuration information of each of the selected tiles to generate a new code stream.

The information processing unit 144 supplies the newly generated code stream to the packet transmitting unit 145. The packet transmitting unit 145 packetizes the code stream and transmits it to the client terminal 120.

The client terminal 120 of the image distribution system 100 shown in Fig. 1 includes functional blocks, i.e., a packet receiving unit 151, a decoding unit 152, an area display image processing unit 153, an image output unit 154, a selection process unit 155, and a selection information transmitting unit 156.

The packet receiving unit 151 receives a packet of a code stream transmitted from the server 110, reconfigures the code stream, and supplies the code stream to the decoding unit 152. The decoding unit 152 decodes the code stream according to the JPEG 2000 standard to obtain image data of each tile and to obtain configuration information of each tile from the header of the code stream.

The area display image processing unit 153 forms an image frame based on the image data and configuration information of each tile obtained by the decoding unit 152 such that an image of each tile will be displayed in a position indicated by the configuration information. The image output unit 154 outputs the image frame formed by the area display image processing unit 153 to the display device 129 to display an image of the image frame on the display device 129.

According to a selection operation of the user at the input device 128, the selection process unit 155 outputs tile selection information to be used for selection of tiles carried out by the tile selection unit 147 of the server 110 as described above. Referring to the selection method, the user can select either a first method in which tiles are selected (specified) by the user or a second method in which selection of tiles is carried out by the server 110.

When the first selection method is selected, the user operates the input device 128 to select one tile or a plurality of tiles. In this case, the user operates the input device 128 to select tiles while monitoring the display device 129 which displays a screen showing the entire image to allow selection of tiles, e.g., a screen showing the entire image in a reduced scale. For example, the user may select desired tiles one by one by moving a cursor to the desired tiles. Alternatively, the user may specify the desired tiles collectively by setting a range corresponding to the desired tiles on a full-screen image displayed for tile selection. Image data for providing a full-screen display for tile selection is transmitted from the server 110 to the client terminal 120 although not described above.

When the user has selected the first selection method as thus described, the tile selection information output by the selection process unit 155 includes information indicating that the first selectionmethod has been selected and information indicating the tiles selected by the user. When the user has selected the second selection method, the tile selection information output by the selection process unit 155 includes information indicating that the second selection method has been selected.

The selection information transmitting unit 156 transmits the tile selection information output by the selection process unit 155 to the server 110. Although not described above, when tile selection information received by the selection information receiving unit 146 is in accordance with the first selection method, the tile selection unit 147 of the server 110 selects tiles based on information on the tiles selected by the user included in the tile selection information (tile specifying information).

When tile selection information received by the selection information receiving unit 146 is in accordance with the second selection method, the tile selection unit 147 of the server 110 selects a predetermined number of tiles taking a displayable area of the client terminal 120 into account. For example, information on terminal capabilities including the information on the displayable area of the client terminal 120 is transmitted from the client terminal 120 to the server 110 when the client terminal 120 is connected to the server 110 as will be detailed later.

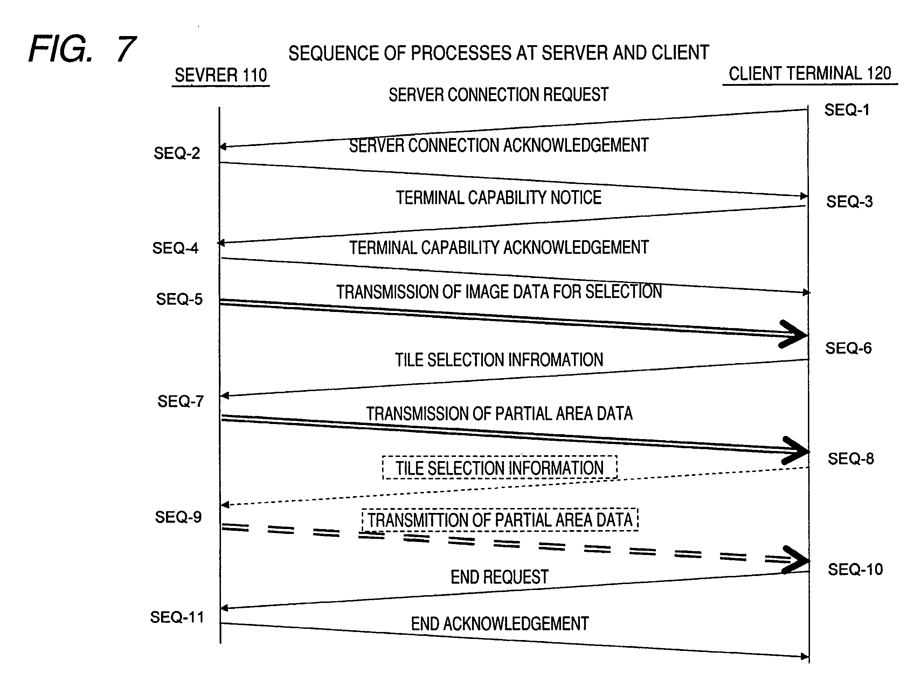

A description will now be made with reference to Fig. 7 on a sequence of processes performed between the server 110 and the client terminal 120 of the image distribution system 100 shown in Figs. 1 and 2.

First, the client terminal 120 transmits a server connection request to the server 110 (SEQ-1). When connection is acceptable, the server 110 transmits a server connection acknowledgement to the client terminal 120 (SEQ-2).

The client terminal 120 notifies the server 110 of capabilities of the terminal such as the displayable area and the frame rate that the terminal can process (SEQ-3). The server 110 interprets the capabilities of the client terminal 120 and transmits a terminal capability acknowledgement to the client terminal 120 (SEQ-4).

According to the capabilities of the client terminal 120, for example, the server 110 performs a process of matching spatial resolution to the displayable area of the client terminal 120. The first operation performed by the server 110 after the reception of a connection request is to transmit image data (image data for selection) for full screen display to be used for tile selection (SEQ-5) to the client terminal 120. As a result, a full-screen image for tile selection is displayed on the display device 129 of the client terminal 120.

Next, the client terminal 120 provides tile selection information to the server 110 (SEQ-6). At this time, the first selection method or the second selection method is selected at the client terminal 120 as described above. When the user has selected the first selection method, the file selection information includes information indicating that the first selection method has been selected and information indicating the tiles selected by the user. When the user has selected the second selection method, information indicating that the second selection method has been selected is included in the tile selection information.

The server 110 selects prescribed tiles based on the tile selection information provided by the client terminal 120, generates a new code stream (partial area data) and transmits it to the client terminal 120 (SEQ-7). At this time, the server 110 extracts encoded data of the selected tiles and creates headers (a main header and a tile-part header) including configuration information of each of the selected tiles to generate a new code stream which allows an image of the selected tiles to be displayed at the client terminal 120.

The client terminal 120 decodes the new code stream (partial area data) transmitted from the server 110 to display an image of the selected tiles on the display device 129 based on the configuration information of each tile included in the header.

When the user newly selects different tiles, new tile selection information is provided from the client terminal 120 to the server 110 (SEQ-8). In response, a code stream (partial area data) based on the new tile selection is transmitted from the server 110 to the client terminal 120 (SEQ-9). The same operations are repeated by the client terminal 120 and the server 110 each time the user newly selects different tiles.

When the user stops viewing the image, the client terminal 120 transmits an end request to the server 110 (SEQ-10). In response, the server 110 transmits an end acknowledgement to the client terminal 120 (SEQ-11) and terminates the distribution operation.

Processes performed by the information processing unit 144 forming part of the server 110 of the image distribution system 100 shown in Fig. 2 will now be described.

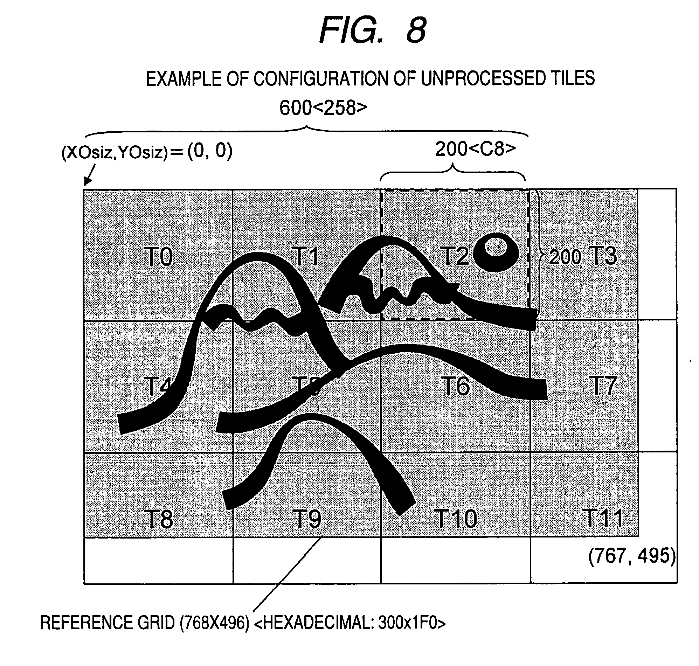

Fig. 8 shows an example of a configuration of tiles in an unprocessed code stream. For simplicity of description, assuming that a reference grid and an image area of the example overlap each other, the size (Xsiz, Ysiz) of the reference grid (image area) is (767<300>, 495<1F0>). The size (XTsiz, YTsiz) of the tiles is (200<C8>, 200<C8>), and the image area is divided into twelve tiles, i.e., tiles T0 to T11. The size of offset (XOsiz, YOsiz) of the image area from the reference grid is (0, 0). Further, the size of offset (XTOsiz, YTOsiz) of the tiles from the reference grid is also (0, 0).

In the example of a tile configuration shown in Fig. 8, when only the tile T2 is selected, the information processing unit 144 extracts encoded data of the tile T2 and creates headers (a main header and a tile-part header) including configuration information of the tile to generate a new code stream for displaying an image of the tile.

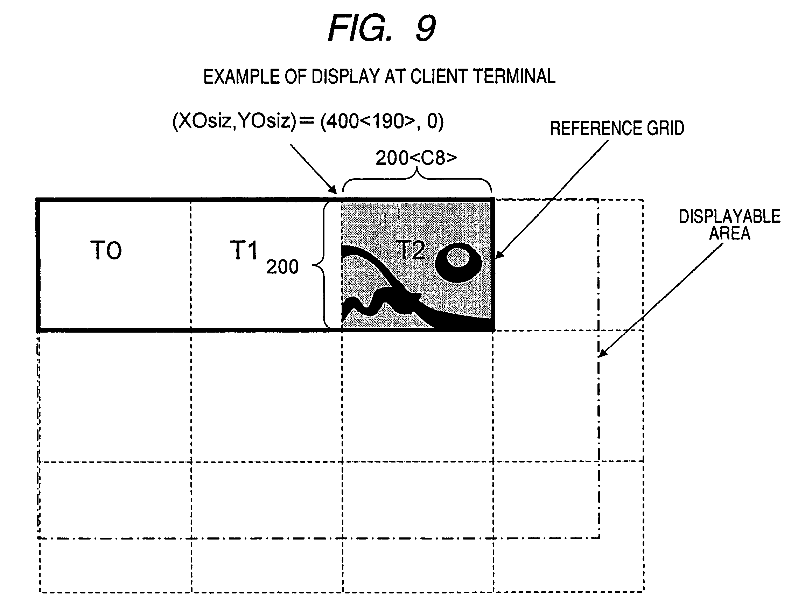

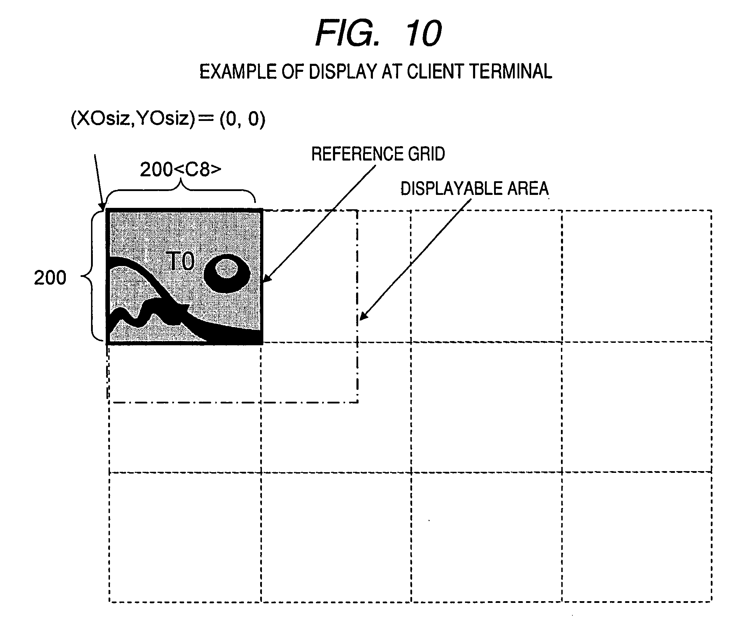

Fig. 9 shows an example of the image displayed on the display device 129 of the client terminal 120. In this case, the information processing unit 144 may change the size (Xsiz, Ysiz) of the reference grid to (600, 200) and the size of offset (XOsiz, YOsiz) of the image area from the reference grid to (400, 0). Fig. 10 shows another example of the image displayed on the display device 129 of the client terminal 120. In this case, the information processing unit 144 may change the size (Xsiz, Ysiz) of the reference grid to (200, 200) and the tile number Isot to 0.

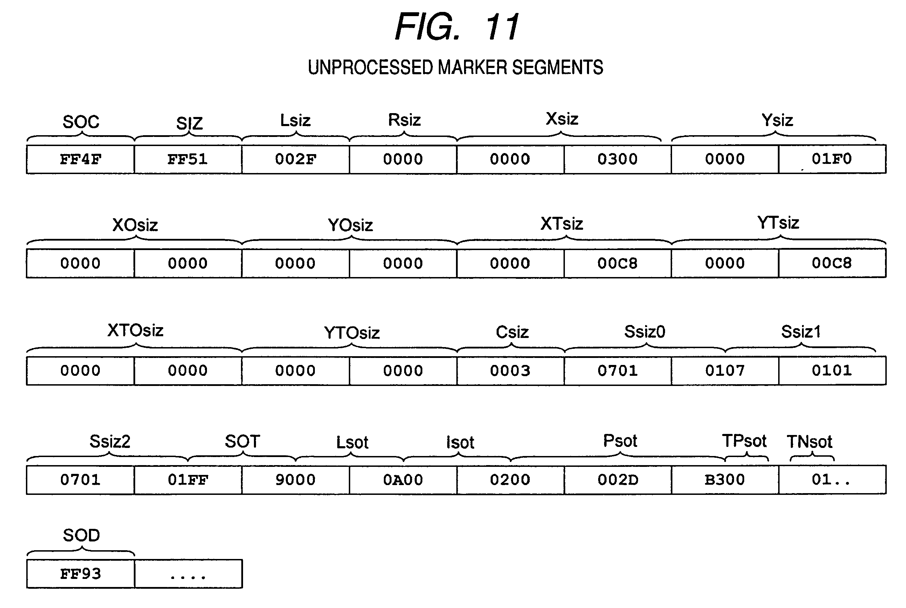

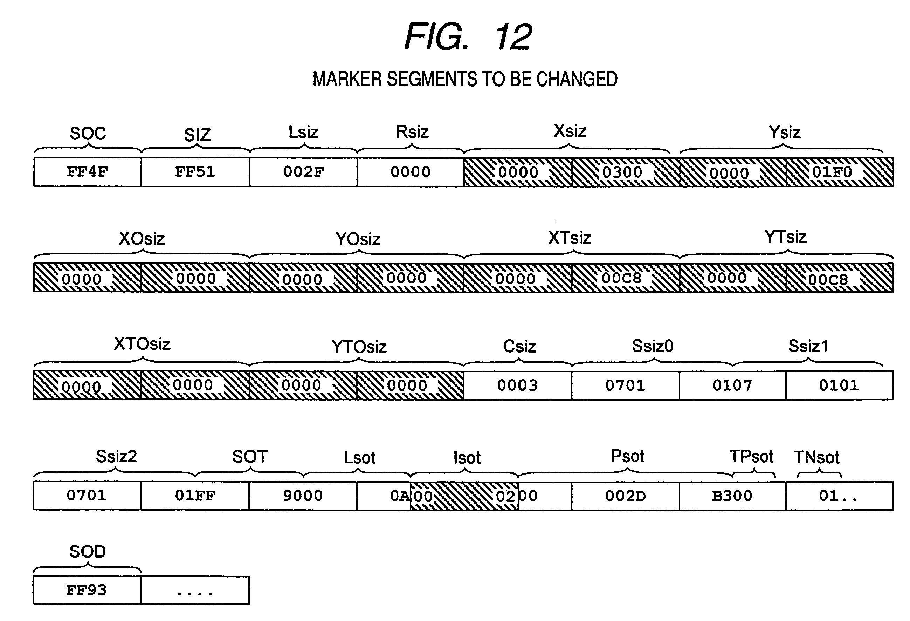

Fig. 11 shows values in the marker segment in the exemplary tile configuration shown in Fig. 8 (unprocessedmarker segment), i.e., values of SOC, SIZ, Lsiz, Rsiz, Xsiz, Ysiz, XOsiz, YOsiz, XTsiz, YTsiz, XTOsiz, YTOsiz, Csiz, Ssiz0, Ssiz1, and Ssiz2 of the main header and values of the tile-part header SOT, Lsot, Isot, Psot, TPsot, and TNsot associated with the tile T2. The values shown in Fig. 11 are in hexadecimal notation, and values in Figs. 12 to 14 described below are also in hexadecimal notation.

The information processing unit 144 of the server 110 changes marker segment values to display tile images of arbitrary tile numbers selected at the client terminal 120 in arbitrary positions. In Fig. 12, parts to be changed are indicated by hatching. Specifically, the parts to be changed are the size of the reference grid (Xsiz, Ysiz), the size of offset of the image area from the reference grid (XOsiz, YOsiz), the size of the tile (XTsiz, YTsiz), the size of offset of the tile from the reference grid (XTOsiz, YTOsiz), and the tile number Isot.

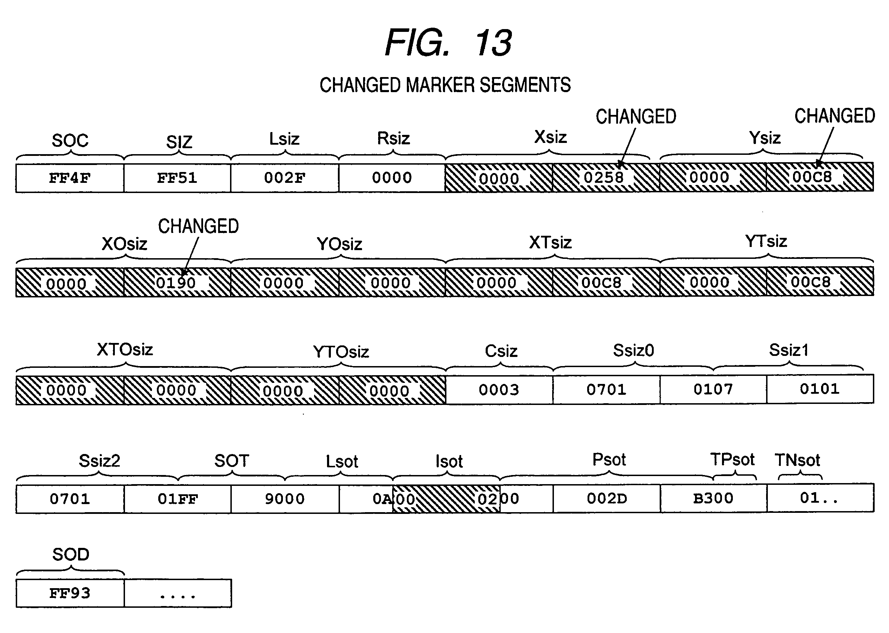

Fig. 13 shows an example of changes made to the marker segment to display an image of the tile T2 as shown in Fig. 9 on the display device 129 of the client terminal 120. In this case, the size of the reference grid (Xsiz, Ysiz) is changed to (600<258>, 200<C8>), and the size of offset of the image area from the reference grid (XOsiz, YOsiz) is changed to (400<190>, 0). Since the tile number Isot 2 is kept unchanged, the image can be displayed in the position of the tile T2.

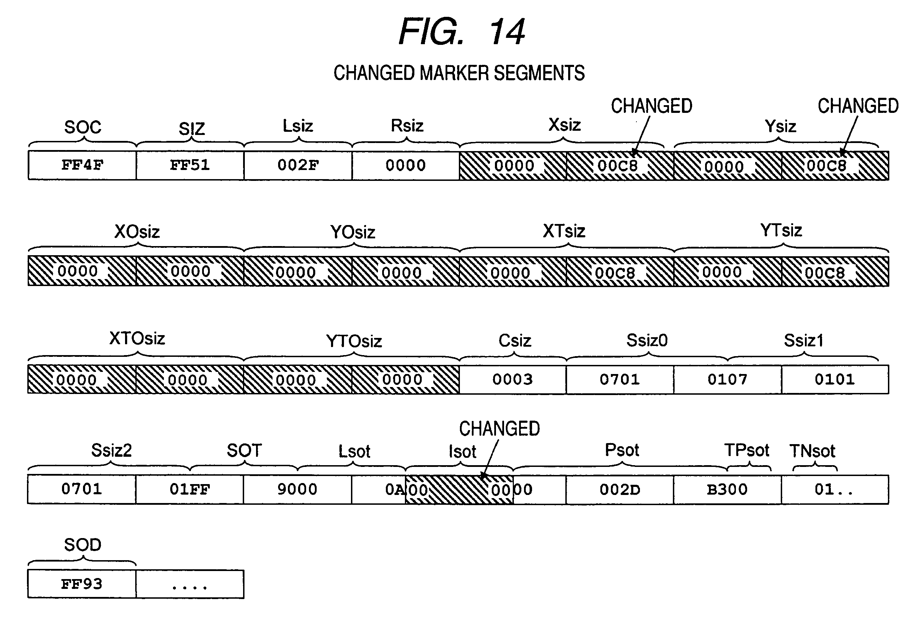

Fig. 14 shows an example of changes made to the marker segment to display an image of the tile T2 as shown in Fig. 10 on the display device 129 of the client terminal 120. In this case, the size of the reference grid (Xsiz, Ysiz) is changed to (200<C8>, 200<C8>), and the tile number Isot is changed to 0. Since the tile number Isot is changed to 0, the image can be displayed in the position of the tile T0.

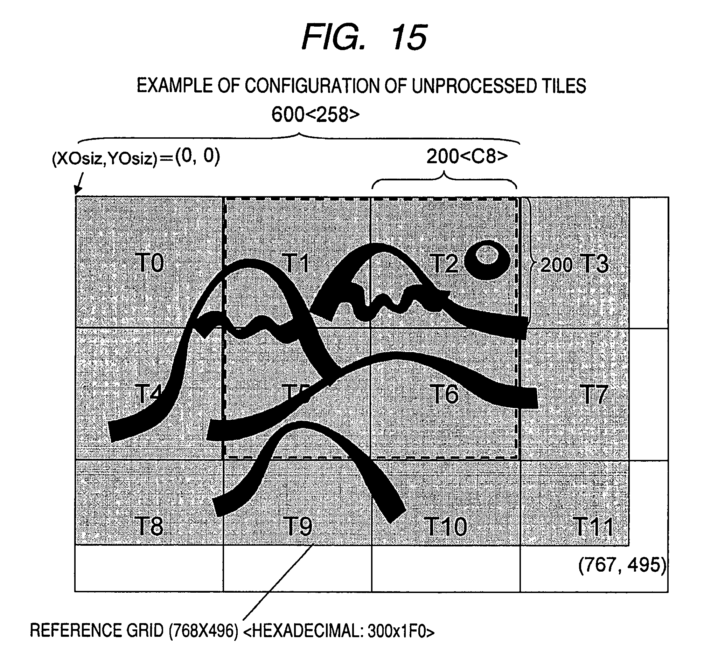

Fig. 15 shows an example of a configuration of tiles in an unprocessed code stream similar to that shown in Fig. 8. When the tiles T1, T2, T5, and T6 in this exemplary configuration are selected, the information processing unit 144 extracts encoded data of the tiles T1, T2, T5, and T6 and creates headers (a main header and tile-part headers) including configuration information of the tiles to generate a new code stream for displaying images of the tiles.

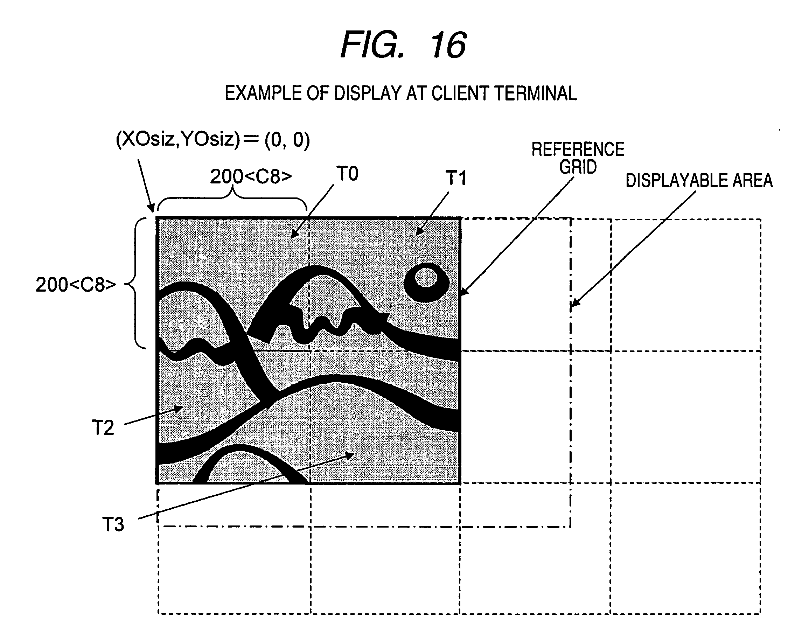

Fig. 16 shows an example of an image displayed on the display device 129 of the client terminal 120. In this case, the size of the reference grid (Xsiz, Ysiz) may be changed to (400, 400), and the tile numbers Isot of the tiles T1, T2, T5, and T6 may be changed to 0, 1, 2, and 3, respectively.

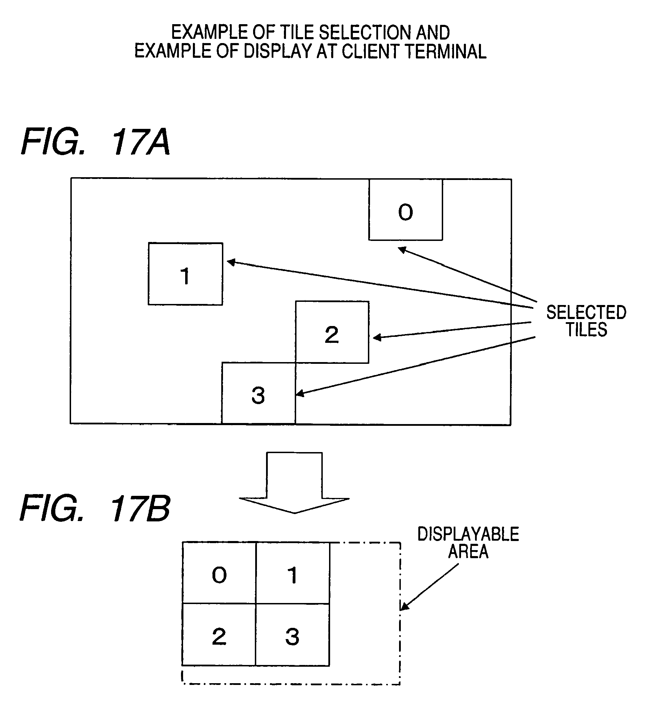

In the example shown in Fig. 15, tiles adjacent to each other are selected. Even when tiles which are not adjacent to each other are selected as shown in Fig. 17A, the tiles can be displayed adjacent to each other at the client terminal 120 as shown in Fig. 17B.

Although encoded data of tiles selected from the same code stream are extracted in the description, tiles associated with a plurality of code streams may be selected, and the information processing unit 144 may extract and process encoded data of tiles selected from the plurality of code streams.

As described above, in the image distribution system 100 shown in Figs. 1 and 2, the information processing unit 144 of the server 110 extracts encoded data of tiles selected by the tile selection unit 147 from among encoded data of a plurality of tiles included in an unprocessed code stream. Headers including configuration information (marker segment) of each of the selected tiles are created to generate a new code stream. The new code stream is transmitted to the client terminal 120. At the client terminal 120, images of the selected tiles can be easily displayed in desired positions on the display device 129 based on the configuration information included in the headers. That is, a process of re-configuring the images to be displayed is not required at the client terminal 120.

In the image distribution system 100 shown in Figs. 1 and 2, when the displayable area of the display device 129 of the client terminal 120 is small, the size of selected tiles may be made equal to or smaller than the displayable size. Thus, only the required image area can be transmitted from the server 110 to the client terminal 120 to display the area on the display device 129 of the client terminal 120 efficiently.

In the above-described embodiment, the number of tiles included in a new code stream generated by the information processing unit 144 of the server 110 is smaller than the number of tiles which have been included in the code stream prior to the process. For example, when tiles are selected from a plurality of code streams, the number of tiles included in a new code stream may be greater than the number of tiles which have been included in one code stream prior to the process.

In the above-described embodiment, the invention is implemented using encoding according to the JPEG 2000 standard. Any encoding method may be employed as long as one image frame is formed by a plurality of tiles (areas) and one frame of encoded data includes a set of independent tile units and identifiers describing the configuration of the tiles as in the JPEG 2000 format.

The above-described embodiment is an application of the invention to an image distribution system 100 including a server 110 and client terminals 120. Obviously, the invention may be similarly applied to two-way communication systems such as television telephone systems and television conference systems.

According to the embodiment of the invention, an image of a selected area can be easily displayed at a receiving end. Therefore, the invention can be used in, for example, image distribution systems including a server and client terminals and two-way communication systems such as television telephone systems and television conference systems.

In so far as the embodiments of the invention described above are implemented, at least in part, using software-controlled data processing apparatus, it will be appreciated that a computer program providing such software control and a transmission, storage or other medium by which such a program is provided are envisages as aspects of the present invention.

It should be understood by those skilled in the art that various modifications, combinations, sub-combinations, and alterations may occur depending on design requirements and other factors insofar as they are within the scope of the appended claims or the equivalents thereof.

## Claims

1. An image transmitting apparatus transmitting an image based on image frame information including encoded data of a plurality of areas obtained by dividing an image frame and a header including configuration information of each area, the apparatus comprising:
an area selecting unit selecting one area or a plurality of areas from among the plurality of areas of one image frame or a plurality different image frames;
an information processing unit extracting encoded data of the area selected by the area selection unit from encoded data of the plurality of areas included in the image frame information of the one image frame or the plurality of different image frames and creating a header including configuration information of each area selected by the area selecting unit to generate new image frame information; and
an image transmitting unit transmitting the image frame information generated by the information processing unit to a receiving end.

2. An image transmitting apparatus according to Claim 1, further comprising an encoding unit encoding an input image frame divided into a plurality of areas and obtaining the image frame information.

3. An image transmitting apparatus according to Claim 2, further comprising an accumulation unit accumulating the image frame information obtained by the encoding unit.

4. An image transmitting apparatus according to Claim 1, wherein the area selecting unit selects an area based on area selection information specifying one area or a plurality of areas among the plurality of areas of one image frame or a plurality of different image frames transmitted from the receiving end.

5. An image transmitting method of an image transmitting apparatus transmitting an image based on image frame information including encoded data of a plurality of areas obtained by dividing an image frame and a header including configuration information of each area, the method comprising the steps of:
selecting one area or a plurality of areas from among. the plurality of areas of one image frame or a plurality of different image frames;
extracting encoded data of the area selected at the area selecting step from encoded data of the plurality of areas included in the image frame information of the one image frame or the plurality of image frames and creating a header including configuration information of each area selected at the area selecting step to generate new image frame information; and
transmitting the image frame information generated at the information processing step to a receiving end.

6. A receiving apparatus connected through a network to an image transmitting apparatus transmitting an image based on image frame information including encoded data of a plurality of areas obtained by dividing an image frame and a header including configuration information of each area, the receiving apparatus comprising:
a transmitting unit transmitting area selection information specifying one area or a plurality of areas among the plurality of areas of one image frame or a plurality of different image frames to the image transmitting apparatus;
a receiving unit receiving new frame information transmitted from the image transmitting apparatus, the new frame information being obtained by extracting encoded data of each area specified by the area selection information from encoded data of the plurality of areas included in the image frame information of the one image frame or the plurality of different image frames and creating a header including configuration information of each area specified by the area selection information; and
a display unit displaying an image of each area specified by the area selection information based on the image frame information received by the receiving unit to the display device.

7. An image transmitting system having an image transmitting apparatus transmitting an image based on image frame information including encoded data of a plurality of areas obtained by dividing an image frame and a header including configuration information of each area and having a receiving apparatus connected to the image transmitting apparatus through a network, wherein the image transmitting apparatus comprises:
an area selecting unit selecting one area or a plurality of areas from among the plurality of areas of one image frame or a plurality different image frames;
an information processing unit extracting encoded data of the area selected by the area selecting unit from encoded data of the plurality of areas included in the image frame information of the one image frame or the plurality of different image frames and creating a header including configuration information of each area selected by the area selecting unit to generate new image frame information; and
a transmitting unit transmitting the image frame information generated by the information processing unit to the receiving apparatus.
